# EUROPEAN PATENT SPECIFICATION

(11) **EP 2 528 722 B1**
(45) Date of publication and mention of the grant of the patent: **11.12.2013**
(21) Application number: 11709469.8
(22) Date of filing: 28.01.2011
(51) Int. Cl.: B29C 45/44

(54) **MOULD FOR INJECTION-MOULDING OF PLASTIC PARTS**
FORM ZUR SPRITZGUSSFORMUNG VON KUNSTSTOFFTEILEN
MOULE POUR LE MOULAGE PAR INJECTION DE PIÈCES DE MATIÈRE PLASTIQUE

(30) Priority: 29.01.2010 IT TO20100066
(43) Date of publication of application: 05.12.2012
(73) Proprietor: H.C.M. Stampi S.r.L., 10129 Torino (IT)
(72) Inventor: BREGOLIN, Amedeo, I-10137 Torino (IT)
(74) Representative: Rondano, Davide
(86) International application number: PCT/IB2011/050373
(87) International publication number: WO 2011/092650

(56) References cited:
- EP-A1- 2 123 423
- FR-A1- 2 809 344
- JP-A- 2007 069 507

## Description

The present invention relates to a mould for injection-moulding of plastic parts, in particular motor-vehicle parts, such as bumpers. The invention has been conceived, and will be described hereinbelow, with particular reference to a mould for injection-moulding of motor-vehicle bumpers, but it is clear that it is likewise applicable to a mould for injection-moulding of plastic parts of different type and use.

Conventionally, the moulds for injection-moulding of plastic parts are composed of an outer part, called die, and an inner part, called punch, the die and the punch defining, in the closed condition of the mould, a cavity inside which the plastic material for forming the finished part is injected by a press. In the particular case of moulds intended for the production of motor-vehicle bumpers, the punch is composed in turn of at least three separate elements, i.e. a central element and at least one pair of lateral elements arranged on opposite sides of the central element, the outer surfaces of these three elements defining the inner profile of the aforementioned cavity defined between the punch and the die. The lateral elements are mounted so as to be slidable with respect to the central element along respective inclined lateral surfaces of the latter and, once the mould is opened, they are pushed forwards (i.e. outwards) so as to disengage from projections or undercuts of the moulded part and thus allow release of the moulded part from the punch. In known moulds for injection-moulding of plastic parts, the punch is supported on a base plate by means of a support structure (commonly referred to by the term "trestle") comprising a pair of spacers. A chamber is defined between the spacers of the support structure and slidably receives an extraction plate which is able to move with an alternating movement in the mould opening/closing direction. A linear actuation unit, conventionally of the hydraulic type, controls the movement of the extraction plate. Typically, the mould also comprises ejection members which are slidably arranged inside suitable holes provided in the central element of the punch and have the function of disengaging the punch from projections or undercuts of the moulded part so as to allow release of the latter from the mould. The ejection members are connected to the extraction plate so as to slide inside the respective holes as a result of the translational movement of the extraction plate. The extraction plate is also connected to the movable lateral elements of the punch by means of respective columns guided through respective inclined holes provided in a support body to which the central element of the punch is fixed, whereby the movable lateral elements of the punch move back and forth along with the extraction plate.

The known structure of the moulds for injection-moulding of plastic parts, as described above, has the disadvantage that the manufacture of the movable components of the mould is complicated and costly and that the punch and the inclined columns are subject, during moulding, to bending and deformation which have a negative effect on the quality of the moulded part.

A mould of the type indicated above is known, for example, from FR2809344. According to this known solution, both the ejection members (consisting in the present case of a single ejection block arranged in the central part of the punch) and the movable lateral elements of the punch are connected by means of respective rods to the extraction plate, which is translatable in the mould opening/closing direction and is operated by means of linear actuation devices formed as hydraulic cylinders. The movement both of the central ejection block and of the movable lateral elements is therefore controlled by the hydraulic cylinders via the extraction plate arranged in between. The fact that both the central ejection block and the movable lateral elements of the punch are operated via the extraction plate results in the mould having large overall sizes and moreover prevents operation of the movable lateral elements independently of the central ejection block.

The object of the present invention is to provide a mould for injection-moulding of plastic parts, in particular of motor-vehicle bumpers, which is not affected by the drawbacks of the prior art mentioned above and which in particular is simpler and more compact, has a low weight, can be manufactured at a lower cost and operates in a more flexible and reliable manner compared to the prior art.

This and other objects are fully achieved according to the present invention by means of a mould for injection-moulding of plastic parts, in particular of motor-vehicle bumpers, having the features defined in the characterizing part of the accompanying independent claim 1.

Further advantageous features of the present invention are specified in the dependent claims, the contents of which are to be understood as forming an integral and integrating part of the description which follows.

In short, the invention is based on the idea of providing a mould for injection-moulding of plastic parts, in particular of motor-vehicle bumpers, comprising a die, a punch formed by a stationary central element and by at least two lateral elements movable with respect to the central element, a base plate, a support body mounted on the base plate for supporting, in the closed mould condition, both the punch and the die, a plurality of ejection members slidably received inside respective holes provided in the central element of the punch, and an extraction plate received inside a chamber defined, in the mould opening/closing direction, between the support body and the base plate, the extraction plate being translatable in the mould opening/closing direction and being connected to the ejection members so as to control the sliding movement thereof inside the respective holes, wherein the two movable lateral elements of the punch are connected directly, i.e. without the extraction plate arranged in between, to respective linear actuation devices, such as hydraulic jacks, so as to be moved relative to the central element of the punch.

Differently from the prior art described above, therefore, according to the invention the lateral elements of the punch are not moved via the extraction plate, for example by means of inclined columns, but are directly moved by the respective linear actuation devices. The extraction plate may therefore have a smaller length compared to the prior art, preferably a length not greater than that of the central element of the punch, with the result that the chamber inside which the extraction plate is received will also have a correspondingly smaller length and therefore the assembly formed by the support body and by the central element of the punch, which in the region of the chamber is subject to bending as a result of its own weight and, during moulding, of the pressure of the plastic material injected into the mould cavity, will be subject to smaller deformations. The mould according to the invention allows therefore to obtain high-quality moulded parts. Moreover, the elimination of the inclined columns allows to simplify the structure of the mould and to reduce the cost thereof compared to the prior art.

Further features and advantages of the present invention will emerge more clearly from the following detailed description, provided purely by way of a non-limiting example, with reference to the accompanying drawings in which:
Figure 1 is a perspective view of the punch of a mould for injection-moulding of plastic parts, in particular of motor-vehicle bumpers, according to a preferred embodiment of the present invention, the punch being shown in the ejection position;
Figure 2 is a front elevation view of the punch of Figure 1;

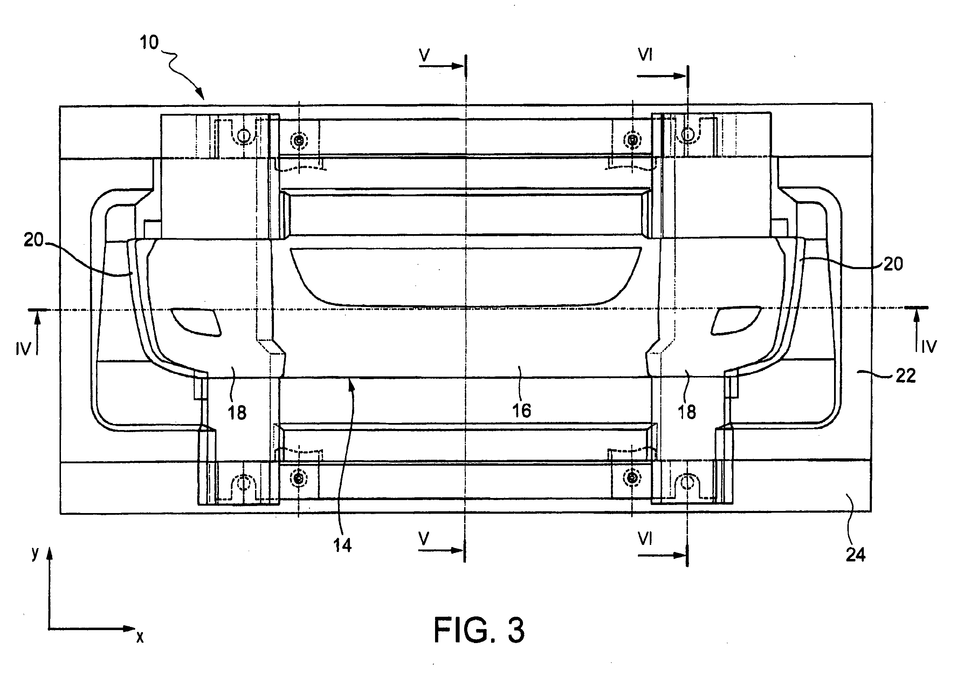

Figure 3 is a top plan view of a mould for injection-moulding of plastic parts, in particular of motor-vehicle bumpers, according to a preferred embodiment of the present invention, the mould being shown without die;
Figure 4 shows the mould of Figure 3 cross-sectioned through a longitudinal vertical plane indicated by IV-IV in Figure 3;
Figure 5 shows the mould according to Figure 3 cross-sectioned through a transverse vertical plane indicated by V-V in Figure 3; and

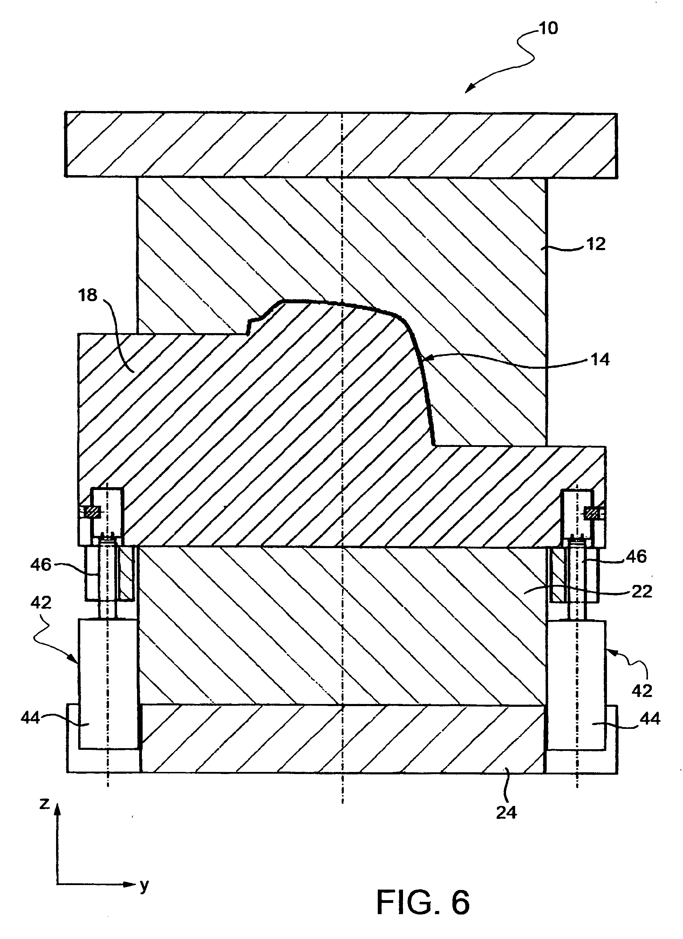

Figure 6 shows the mould of Figure 3 cross-sectioned through another transverse vertical plane indicated by VI-VI in Figure 3.

In the description and the claims below, terms such as "vertical" and "horizontal" or "top" and "bottom", are to be understood referring to the installed condition of the mould, where the mould opening/closing direction (indicated "z" in the drawings) is oriented vertically. Moreover, the terms "longitudinal" and "length" on the one hand and "transverse" and "width" on the other hand refer to a pair of horizontal directions perpendicular to each other, oriented in the direction of maximum extension (indicated "x" in the drawings) and in the direction of minimum extension of the mould (indicated "y" in the drawings), respectively.

With reference to the drawings, a mould for injection-moulding of plastic parts, in the example shown a mould for injection-moulding of motor-vehicle bumpers, is generally indicated 10 and basically comprises a die 12 and a punch 14 which define a cavity inside which the plastic material shall be injected by a press, in a manner known per se. The punch 14 comprises in turn a stationary central element 16, a first pair of movable lateral elements 18 (referred to henceforth simply as first lateral elements) arranged on longitudinally opposite sides relative to the central element 16, and a second pair of movable lateral elements 20 (referred to henceforth simply as second lateral elements) arranged on longitudinally opposite sides relative to the first lateral elements 18 and drivingly connected for translation therewith. The outer surfaces of the central element 16 and of the first and second lateral elements 18, 20 are suitably shaped so as to define, along with the die 12, the shape of the moulding cavity and therefore give to the part to be moulded the desired shape.

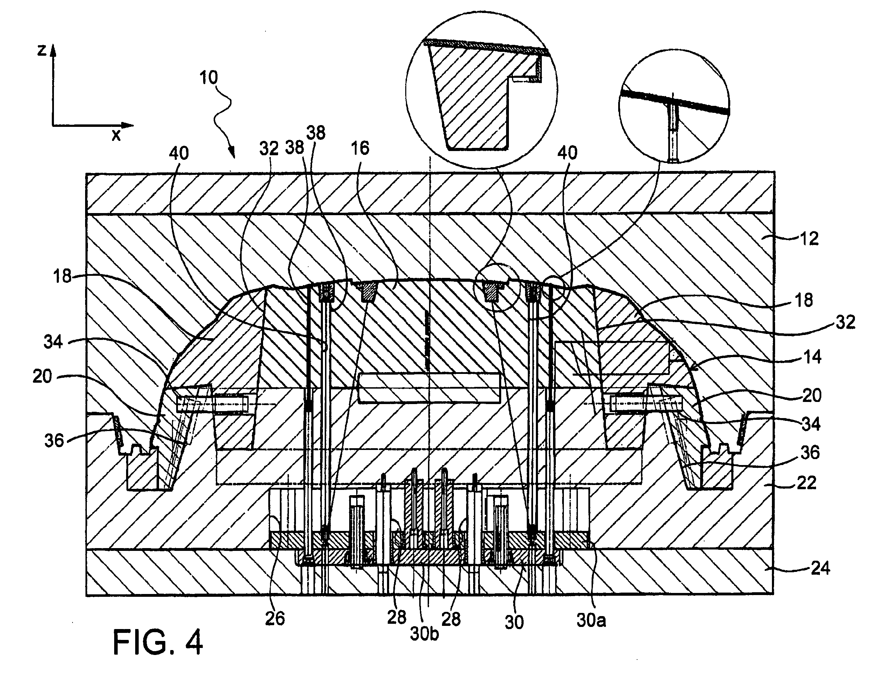

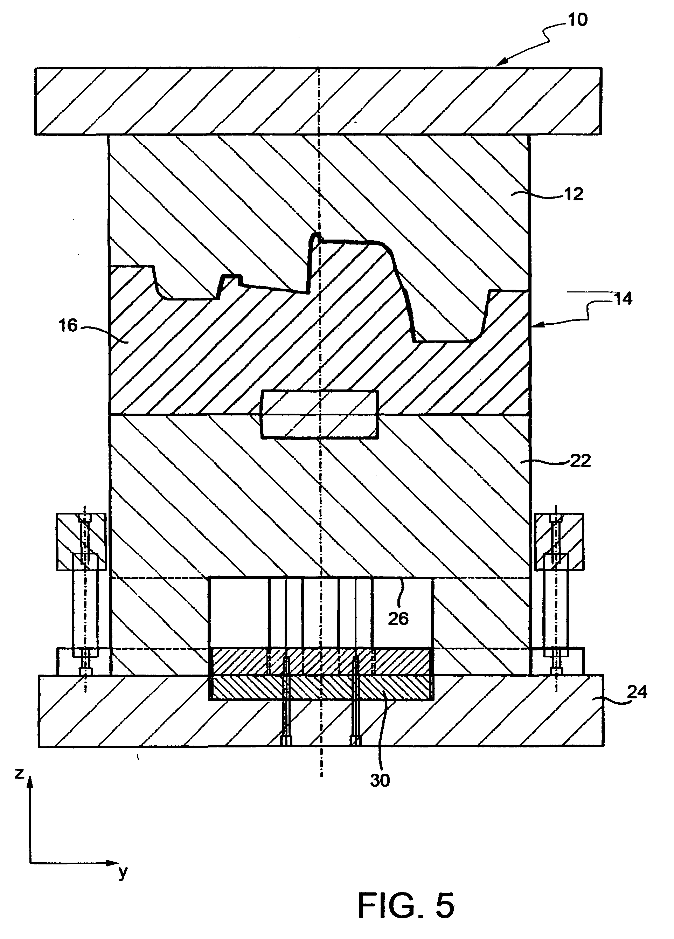

The mould 10 also comprises a support body 22 for supporting both the die 12 and the punch 14. The central element 16 of the punch 14 is fixed to the support body 22, while the die 12 and the first and second lateral elements 18, 20 of the punch 14 are simply rested, in the closed mould condition, on the support body 22. The mould 10 also comprises a base plate 24 on which the support body 22 is mounted. The support body 22 has, on its bottom side, a cavity 26 which is closed at the bottom by the base plate 24 so as to form a chamber inside which an extraction plate 30 (visible in Figures 4 and 5) is arranged in a vertically slidable manner, guided along vertical columns 28. As can be seen in particular in Figure 4, preferably the cavity 26, and therefore the extraction plate 30, have a length (longitudinal dimension) not greater than that of the central element 16 of the punch 14. Owing to the smaller length of the cavity 26 compared to the prior art discussed in the introductory part of the present description, it is possible to reduce the projecting part of the support body 22 and therefore reduce the deformations to which the support body 22 and the central element 16 of the punch 14 are subject both as a result of their own weight and in particular as a result of the pressure exerted during moulding by the plastic material injected into the cavity formed between die 12 and punch 14.

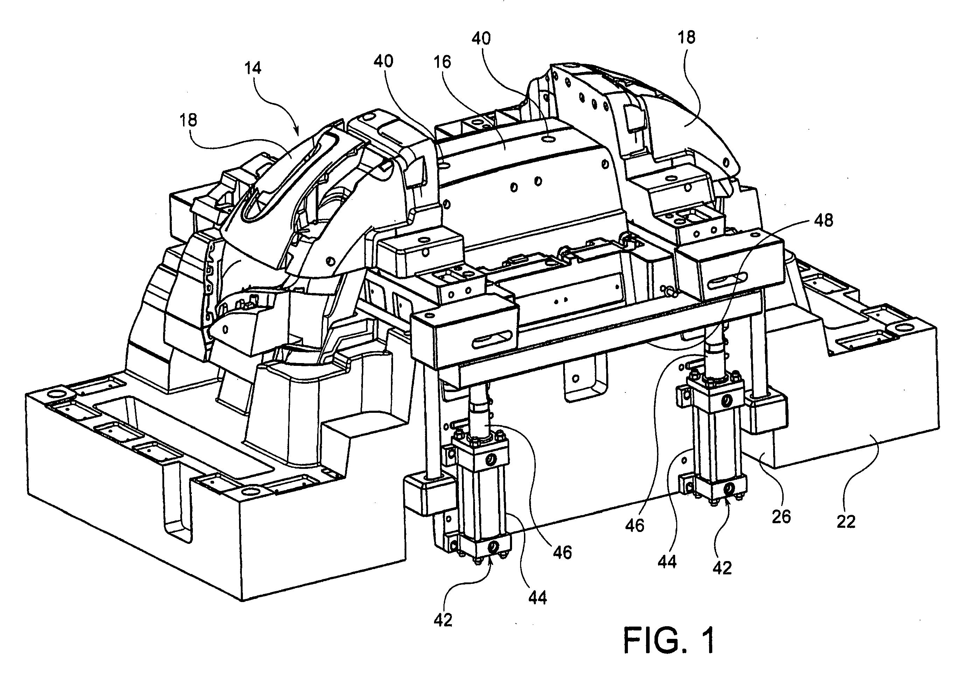

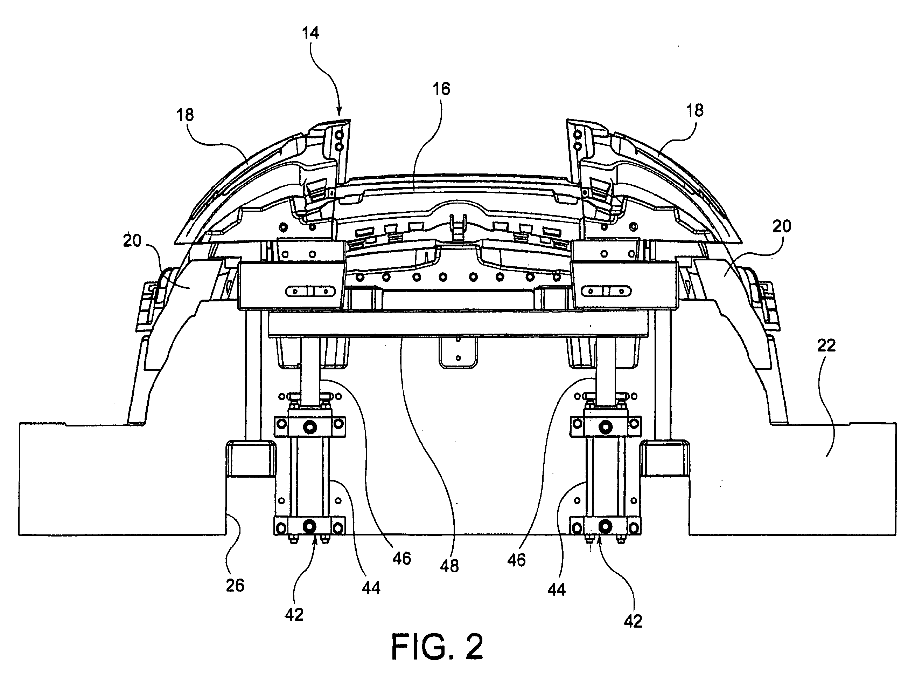

The first lateral elements 18 of the punch 14 are slidably guided by means of suitable guides (not shown) along respective inclined lateral surfaces 32 formed partly (top part) by the central element 16 of the punch 14 and partly (bottom part) by the support body 22 to be displaced between a moulding position (shown in Figure 4), in which these lateral elements are arranged with the respective outer surfaces aligned with the outer surface of the central element 16 so as to define with the latter the inner profile of the part to be moulded, and an ejection position (shown in Figures 1 and 2), in which these lateral elements are displaced upwards relative to the central element 16 for ejection of the moulded part. Each second lateral element 20 is connected to a respective first lateral element 18 by means of a longitudinal cylindrical guide 34 so as to be drivingly connected for translation with the first lateral element 18 in the vertical direction z, but free to translate relative to the first lateral element 18 in the longitudinal direction x. The second lateral elements 20 are moreover slidably guided by means of suitable guides (not shown) along respective inclined lateral surfaces 36 formed by the support body 22. The inclinations of the lateral surfaces 32 and 36 will be chosen in each case depending on the dimensions and the geometry of the undercuts of the part to be moulded and in any case may be greater than those permitted by conventional moulds.

The mould 10 also comprises a plurality of ejection members 38 which may be equally well all of the same type or different from each other (but in any case all known per se) and which are slidably arranged each inside a respective through-hole 40 which extends partly through the support body 22 and partly through the central element 16 of the punch 14. The ejection members 38 are four in number in the embodiment shown in the drawings (see in particular Figure 4), but their number depends obviously on the specific application, in particular on the number of undercut formations which must be provided on the portion of the part to be moulded, the shape of which is defined by the outer surface of the central element 16 of the punch 14. Each ejection member 38 is connected at its bottom end to the extraction plate 30 so as to be displaced vertically in either direction along with the latter. More precisely, in the embodiment shown, the extraction plate 30 is a double plate, with a top plate 30a and a bottom plate 30b which can be moved independently of each other. In this case, some of the ejection members 38 (in the example shown the longitudinally inner members) are connected to the top plate 30a and are therefore moved together therewith, while the remaining ejection members 38 (in the example shown the longitudinally outer members) are connected to the bottom plate 30b and are therefore moved together therewith. Obviously, in the case of parts to be moulded devoid of bosses or undercuts in their central part, the ejection members, and along with them the extraction plate (be it single or double), could also be dispensed with.

Differently from the prior art discussed above, the extraction plate 30 has merely the function of moving the ejection members 38 and not also of moving the first and second lateral elements 18, 20 of the punch 14. Linear actuation devices 42 are instead provided for moving the first and second lateral elements 18, 20 of the punch 14, said devices being operatively connected to the first lateral elements 18 so as to control the movement of these elements, and together therewith that of the second lateral elements 20, between the aforementioned moulding and ejection positions. In the embodiment shown, the linear actuation devices 42 are four in number and are made as hydraulic jacks each comprising a cylinder 44 fixed to the base plate 24 and a rod 46 connected at its top end to the associated first lateral element 18. More specifically, the rods 46 of the four linear actuation devices 42 are connected at their top end to a support frame 48 (formed for example as a rectangular frame composed of four straight bars) to which the first lateral elements 18 are fixed, whereby the first lateral elements 18 are drivingly connected for translation with each other via the support frame 48. However, a different number and/or different types of linear actuation devices may obviously be envisaged with respect to those described and illustrated here.

## Claims

1. Mould (10) for injection-moulding of plastic parts, in particular motor-vehicle parts, comprising a die (12) and a punch (14) displaceable with respect to each other along an opening/closing direction (z) between a closed mould position, in which they define a cavity intended to receive plastic material injected by a press, and an open mould position, in which they are spaced from each other by an amount such as to allow ejection of the moulded plastic part,
wherein the punch (14) comprises a stationary central element (16) having an outer surface and a pair of lateral surfaces (32) inclined relative to the opening/closing direction (z), as well as a pair of first movable lateral elements (18) arranged on longitudinally opposite sides relative to the central element (16) and having respective outer surfaces, the outer surfaces of the central element (16) and of the first lateral elements (18) of the punch (14) being suitably shaped to define the profile of the plastic part to be moulded,
wherein each of the first lateral elements (18) of the punch (14) is slidably guided along the respective inclined lateral surface (32) of the central element (16) of the punch (14) to be displaced between a moulding position, in which the outer surface of the lateral element (18) is aligned with the outer surface of the central element (16), and an ejection position, in which the outer surface of the lateral element (18) projects outwards with respect to the outer surface of the central element (16) for ejection of the moulded part,
wherein the mould (10) further comprises a plurality of linear actuation devices (42) arranged to control the movement of the first lateral elements (18) of the punch (14) relative to the central element (16) between the aforementioned moulding and ejection positions, and
wherein the mould (10) further comprises a plurality of ejection members (38) slidably received inside respective holes (40) provided in the central element (16) of the punch (14), and an extraction plate (30, 30a, 30b) which is translatable in the mould opening/closing direction and is connected to the ejection members (38) to control the sliding movement thereof inside the respective holes (40),
the mould (10) being **characterized in that** the linear actuation devices (42) are connected to the first lateral elements (18) of the punch (14) without the extraction plate (30, 30a, 30b) being arranged in between.

2. Mould according to Claim 1, wherein the linear actuation devices (42) are hydraulic jacks.

3. Mould according to Claim 1 or Claim 2, wherein the linear actuation devices (42) each comprise a respective expulsion member (46) movable in a direction parallel to the opening/closing direction (z).

4. Mould according to Claim 3, further comprising a support frame (48) to which the first lateral elements (18) are fixed, the expulsion members (46) of the linear actuation devices (42) being each connected to the support frame (48) so as to be drivingly connected to each other in the movement along the opening/closing direction (z).

5. Mould according to any one of the preceding claims, wherein the punch (14) further comprises a pair of second lateral elements (20) arranged on longitudinally opposite sides with respect to the first lateral elements (18), wherein each second lateral element (20) is connected to a respective first lateral element (18) so as to be drivingly connected for translation with the latter in the opening/closing direction (z), but free to translate relative to the latter in a longitudinal direction (x) of the mould.

6. Mould according to any one of the preceding claims, further comprising a base plate (24) and a support body (22) mounted on the base plate (24) to support, in the closed mould condition, both the punch (14) and the die (12), the support body (22) and the base plate (24) enclosing a chamber (26) inside which the extraction plate (30, 30a, 30b) is arranged.

7. Mould according to Claim 6, wherein the length or longitudinal dimension of the chamber (26) is not greater than that of the central element (16) of the punch (14).

## Patentansprüche

1. Form (10) zur Spritzgussformung von Kunststoffteilen, insbesondere Kraftfahrzeugteilen, umfassend eine Matrize (12) und einen Stempel (14), die entlang einer öffnenden/schließenden Richtung (z) zwischen einer geschlossenen Formposition, in der sie eine Kavität definieren, die das mittels einer Presse eingespritzte Kunststoffmaterial aufnehmen soll, und einer offenen Formposition, in der sie in solchem Maße voneinander beabstandet sind, dass der Auswurf des geformten Kunststoffteils ermöglicht wird, gegeneinander verschiebbar sind,
wobei der Stempel (14) ein stationäres Mittelelement (16) mit einer Außenfläche und einem Paar Seitenflächen (32) umfasst, die in Bezug auf die öffnende/schließende Richtung (z) geneigt sind, sowie ein Paar erste bewegbare Seitenelemente (18), die auf längs gegenüberliegenden Seiten in Bezug auf das Mittelelement (16) angeordnet sind und entsprechende Außenflächen aufweisen, wobei die Außenflächen des Mittelelements (16) und der ersten Seitenelemente (18) des Stempels (14) passend geformt sind, um das Profil des zu formenden Kunststoffteils zu definieren,
wobei jedes der ersten Seitenelemente (18) des Stempels (14) gleitend entlang der jeweiligen geneigten Seitenfläche (32) des Mittelements (16) des Stempels (14) geführt wird, um zwischen einer Angussposition, in der die Außenfläche des Seitenelements (18) bündig mit der Außenfläche des Mittelelements (16) angeordnet ist, und einer Auswurfposition, in der die Außenfläche des Seitenelements (18) in Bezug auf die Außenfläche des Mittelelements (16) zum Auswerfen des geformten Teils nach außen ragt, verschoben zu werden,
wobei die Form (10) ferner eine Vielzahl linearer Betätigungsvorrichtungen (42) umfasst, die angeordnet sind, um die Bewegung der ersten Seitenelemente (18) des Stempels (14) in Bezug auf das Mittelelement (16) zwischen den zuvor genannten Anguss- und Auswurfpositionen zu steuern, und
wobei die Form (10) ferner eine Vielzahl von Auswurfteilen (38) umfasst, die gleitend in entsprechenden Löchern (40) aufgenommen werden, die im Mittelelement (16) des Stempels (14) ausgeführt sind, und eine Entnahmeplatte (30, 30a, 30b), die in der öffnenden/schließenden Richtung der Form verschiebbar und mit den Auswurfteilen (38) verbunden ist, um deren Gleitbewegung in den entsprechenden Löchern (40) zu steuern,
wobei die Form (10) **dadurch gekennzeichnet ist, dass** die linearen Betätigungsvorrichtungen (42) mit den ersten Seitenelementen (18) des Stempels (14) verbunden sind, ohne dass die Entnahmeplatte (30, 30a, 30b) dazwischen angeordnet ist.

2. Form nach Anspruch 1, wobei die linearen Betätigungsvorrichtungen (42) hydraulische Heber sind.

3. Form nach Anspruch 1 oder 2, wobei die linearen Betätigungsvorrichtungen (42) jeweils ein entsprechendes Ausstoßteil (46) umfassen, das in eine zur öffnenden/schließenden Richtung (z) parallele Richtung bewegbar ist.

4. Form nach Anspruch 3, ferner umfassend ein Traggestell (48), an dem die ersten Seitenelemente (18) befestigt sind, wobei die Ausstoßteile (46) der linearen Betätigungsvorrichtungen (42) jeweils mit dem Traggestell (48) verbunden sind, um in der Bewegung entlang der öffnenden/schließenden Richtung (z) antriebsmäßig miteinander verbunden zu sein.

5. Form nach einem der vorhergehenden Ansprüche, wobei der Stempel (14) ferner ein Paar zweite Seitenelemente (20) umfasst, die auf längs gegenüberliegenden Seiten in Bezug auf die ersten Seitenelemente (18) angeordnet sind, wobei jedes zweite Seitenelement (20) mit einem entsprechenden ersten Seitenelement (18) verbunden ist, um zur Verschiebung mit Letzterem in der öffnenden/schließenden Richtung (z) antriebsmäßig verbunden zu sein, aber in Bezug auf Letzteres in eine Längsrichtung (x) der Form frei verschiebbar zu sein.

6. Form nach einem der vorhergehenden Ansprüche, ferner umfassend eine Sockelplatte (24) und einen Tragkörper (22), der auf der Sockelplatte (24) befestigt ist, um im geschlossenen Formzustand sowohl den Stempel (14) als auch die Matrize (12) zu tragen, wobei der Tragkörper (22) und die Sockelplatte (24) eine Kammer (26) einschließen, in der die Entnahmeplatte (30, 30a, 30b) angeordnet ist.

7. Form nach Anspruch 6, wobei die Länge oder Längsabmessung der Kammer (26) nicht größer ist als jene des Mittelelements (16) des Stempels (14).

## Revendications

1. Moule (10) pour le moulage par injection de pièces en plastique, en particulier de pièces pour véhicule à moteur, comprenant une matrice (12) et un poinçon (14) pouvant être déplacés l'un par rapport à l'autre le long d'une direction d'ouverture/fermeture (z) entre une position de moule fermé, dans laquelle ils définissent une cavité destinée à recevoir une matière plastique injectée par une presse, et une position de moule ouvert, dans laquelle ils sont espacés l'un de l'autre d'une distance qui permet l'éjection de la pièce en plastique moulé,
dans lequel le poinçon (14) comprend un élément central fixe (16) ayant une surface extérieure et une paire de surfaces latérales (32) inclinées par rapport à la direction d'ouverture/fermeture (z), ainsi qu'une paire de premiers éléments latéraux mobiles (18) placés sur des côtés longitudinalement opposés par rapport à l'élément central (16) et ayant des surfaces extérieures respectives, les surfaces extérieures de l'élément central (16) et des premiers éléments latéraux (18) du poinçon (14) ayant une forme appropriée pour définir le profil de la pièce en plastique à mouler,
dans lequel chacun des premiers éléments latéraux (18) du poinçon (14) est guidé de façon glissante le long de la surface latérale inclinée respective (32) de l'élément central (16) du poinçon (14) à déplacer entre une position de moulage, dans laquelle la surface extérieure de l'élément latéral (18) est alignée avec la surface extérieure de l'élément central (16), et une position d'éjection, dans laquelle la surface extérieure de l'élément latéral (18) fait saillie vers l'extérieur par rapport à la surface extérieure de l'élément central (16) pour l'éjection de la pièce moulée,
dans lequel le moule (10) comprend en outre une pluralité de dispositifs d'actionnement linéaire (42) agencés pour commander le mouvement des premiers éléments latéraux (18) du poinçon (14) par rapport à l'élément central (16) entre les positions de moulage et d'éjection susmentionnées, et
dans lequel le moule (10) comprend en outre une pluralité d'éléments d'injection (38) reçus de façon glissante à l'intérieur de trous respectifs (40) prévus dans l'élément central (16) du poinçon (14), et une plaque d'extraction (30, 30a, 30b) qui peut suivre une translation dans la direction d'ouverture/fermeture du moule et qui est connectée aux éléments d'éjection (38) pour commander le mouvement glissant de ceux-ci à l'intérieur des trous respectifs (40),
le moule (10) étant **caractérisé en ce que** les dispositifs d'actionnement linéaire (42) sont connectés aux premiers éléments latéraux (18) du poinçon (14) sans que la plaque d'extraction (30, 30a, 30b) ne soit placée entre eux.

2. Moule selon la revendication 1, dans lequel les dispositifs d'actionnement linéaire (42) sont des vérins hydrauliques.

3. Moule selon la revendication 1 ou 2, dans lequel les dispositifs d'actionnement linéaire (42) comprennent chacun un élément d'expulsion respectif (46) mobile dans une direction parallèle à la direction d'ouverture/fermeture (z).

4. Moule selon la revendication 3, comprenant en outre un cadre de support (48) sur lequel sont fixés les premiers éléments latéraux (18), les éléments d'expulsion (46) des dispositifs d'actionnement linéaire (42) étant connectés chacun au cadre de support (48) afin d'être connectés en entraînement les uns aux autres dans le mouvement le long de la direction d'ouverture/fermeture (z).

5. Moule selon l'une quelconque des revendications précédentes, dans lequel le poinçon (14) comprend en outre une paire de deuxièmes éléments latéraux (20) disposés sur des côtés longitudinalement opposés par rapport aux premiers éléments latéraux (18), dans lequel chaque deuxième élément latéral (20) est connecté à un premier élément latéral respectif (18) afin d'être connecté en entraînement pour suivre une translation avec ce dernier dans la direction d'ouverture/fermeture (z), mais libre de suivre une translation par rapport à ce dernier dans une direction longitudinale (x) du moule.

6. Moule selon l'une quelconque des revendications précédentes, comprenant en outre une plaque de base (24) et un corps de support (22) monté sur la plaque de base (24) pour supporter, dans l'état du moule fermé, à la fois le poinçon (14) et la matrice (12), le corps de support (22) et la plaque de base (24) définissant une chambre (26) à l'intérieur de laquelle est disposée la plaque d'extraction (30, 30a, 30b).

7. Moule selon la revendication 6, dans lequel la longueur ou dimension longitudinale de la chambre (26) n'est pas supérieure à celle de l'élément central (16) du poinçon (14).
